# EUROPEAN PATENT APPLICATION

(11) **EP 0 687 797 A1**
(43) Date of publication of application: **20.12.1995**
(21) Application number: 95304149.8
(22) Date of filing: 15.06.1995
(51) Int. Cl.: E21B 10/56

(54) **Improvements in or relating to elements faced with superhard material**

(30) Priority: 18.06.1994 GB 9412247
(71) Applicant: CAMCO DRILLING GROUP LIMITED, Stonehouse, Gloucestershire GL10 3RQ (GB)
(72) Inventor: Fuller, John M., Nailsworth, Gloucestershire (GB); Sarik, Daniel J., Katy, Texas 77450 (GB); Newton, Alex, Clifton, Bristol, Avon (GB); Matthias, Terry R., Longlevens, Gloucestershire (GB)
(74) Representative: Carter, Gerald

(57) **Abstract**

A preform element, which may be used as a cutter in a rotary drill bit, includes a facing table (42) of polycrystalline diamond bonded to a tungsten carbide substrate (41).The facing table (42) is of non-uniform thickness and comprises a region of greater thickness adjacent the cutting edge and extending towards the interior of the element. In one embodiment the region of greater thickness comprises a ridge of superhard material which extends into the substrate (41), or from the front face of the element, and is of substantially constant width as it extends away from the cutting edge. The provision of the ridge causes the cutting edge to wear in a pointed configuration in use.

## Description

The invention relates to elements faced with superhard material, and particularly to preform elements comprising a facing table of superhard material having a front face, a peripheral surface, and a rear surface bonded to a substrate of material which is less hard than the superhard material.

Preform elements of this kind are often used as cutting elements on rotary drag-type drill bits, and the present invention will be particularly described in relation to such use. However, the invention is not restricted to cutting elements for this particular use, and may relate to preform elements for other purposes.

Preform elements used as cutting elements in rotary drill bits usually have a facing table of polycrystalline diamond, although other superhard materials are available, such as cubic boron nitride and amorphous diamond-like carbon (ADLC). The substrate of less hard material is often formed from cemented tungsten carbide, and the facing table and substrate are bonded together during formation of the element in a high pressure, high temperature forming press. This forming process is well known and will not be described in detail.

Each preform cutting element may be mounted on a carrier in the form of a generally cylindrical stud or post received in a socket in the body of the drill bit. The carrier is often formed from cemented tungsten carbide, the surface of the substrate being brazed to a surface on the carrier, for example by a process known as "LS bonding". Alternatively, the substrate itself may be of sufficient thickness as to provide, in effect, a cylindrical stud which is sufficiently long to be directly received in a socket in the bit body, without being brazed to a carrier. The bit body itself may be machined from metal, usually steel, or may be moulded using a powder metallurgy process.

Such cutting elements are subjected to extremes of temperature during formation and mounting on the bit body, and are also subjected to high temperatures and heavy loads when the drill is in use down a borehole. It is found that as a result of such conditions spalling and delamination of the superhard facing table can occur, that is to say the separation and loss of the diamond or other superhard material over the cutting surface of the table.

Commonly, in preform elements of the above type the interface between the superhard table and the substrate has usually been flat and planar. However, particularly in cutting elements for drill bits, attempts have been made to improve the bond between the superhard facing table and the substrate by configuring the rear face of the facing table so as to provide a degree of mechanical interlocking between the facing table and substrate.

One such arrangement is shown in U.S. Patent Specification No. 512327 where the rear surface of the facing table is integrally formed with a plurality of identical spaced apart parallel ridges of constant depth. The facing table also includes a peripheral ring of greater thickness, the extremities of the parallel ridges intersecting the surrounding ring. U.S. Specification No. 4784023 illustrates a similar arrangement but without the peripheral ring.

The present invention provides other and novel means for configuring the facing table, not only to reduce the risk of delamination and spalling, but also to provide other advantages, as will be explained.

According to the invention there is provided a preform element including a facing table of superhard material having a front face, a peripheral surface, and a rear surface bonded to a substrate which is less hard than the superhard material, the facing table being of continuously varying thickness over at least a part of its area, whereby the rear surface thereof is non-planar. The front face of the facing table may be substantially flat.

In the case where the preform element is a cutting element for use on a rotary drill bit, part of the peripheral surface of the cutting element forms a cutting edge, and the facing table is of greater thickness in the vicinity of the cutting edge. An area of the facing table which includes said cutting edge may increase gradually in thickness, for example linearly, as it extends from an interior region of the facing table to said cutting edge.

Said area of increasing thickness of the facing table may have an arcuate boundary within the interior of the facing table.

In an alternative arrangement an enclosed area of the facing table, adjacent the cutting edge, increases in thickness, for example linearly, as it extends from the periphery of the area to a central region thereof. A part of the periphery of said area may define at least a part of the cutting edge of the element. Said area may be substantially circular.

Preform cutting elements for rotary drill bits are often in the form of circular tablets, a part of the peripheral surface of the circular tablet providing the cutting edge. As the cutting element wears during use a flat forms on the cutting edge, which flat widens as wear increases. This formation of a flat tends to decrease the cutting efficiency of the cutting element as wear progresses. In order to increase the cutting efficiency of preform cutting elements, it has sometimes been proposed to use non-circular configurations and in particular configurations where the cutting edge is more "pointed", i.e. the cutting edge is short and the peripheral surface of the cutting element to each side of the cutting edge extends away from the formation being cut at a sharp angle instead of comprising the smooth arcuate periphery of a circular element. While such an arrangement reduces the rate at which the flat on the cutting edge increases, nevertheless such increase still occurs with the result that the cutting efficiency of the cutting element decreases with wear. The present invention therefore also provides a form of cutting element where the length of the cutting edge does not increase significantly as wear progresses, or where such increase is less than has been the case heretofore.

Accordingly, the invention also provides a preform cutting element including a facing table of superhard material having a front face, a peripheral surface, and a rear surface bonded to a substrate which is less hard than the superhard material, the facing table being of non-uniform thickness and comprising a region of greater thickness extending away from the cutting edge towards the interior of the cutting element. Preferably the region of greater thickness comprises a ridge of superhard material which is of substantially constant width as it extends away from the cutting edge.

As a result of the greater thickness of the superhard layer behind the cutting edge, this region wears at a slower rate than the parts of the superhard layer to either side of the cutting edge. As a result, the cutting element is worn away more rapidly to each side of the cutting edge resulting in development of a generally "pointed" configuration of the cutting element as wear progresses, so that the efficiency of the cutting element tends to be maintained.

The ridge of greater thickness may extend across the cutting element from the cutting edge to the opposite part of the peripheral surface. The thickness of the facing table may vary continuously from a minimum thickness at each of two side edges to a maximum thickness in the region of a centreline of the cutter extending away from the cutting edge.

The front face of the facing table may be substantially flat so that the portion of greater thickness projects into the substrate. Alternatively, the variation in thickness of the facing table may provide a non-planar front face for the facing table. A preform cutting element according to Claim 3, wherein part of the peripheral surface of the element is substantially straight to provide a straight cutting edge, and wherein the facing table is of maximum thickness along said straight cutting edge and decreases in thickness as it extends away from the cutting edge.

In another arrangement according to the invention, the facing table is formed with an aperture which is filled with the material of the substrate, so that part of the substrate forms part of the front face of the cutting element, and the facing table being of maximum thickness at the periphery of the cutting element and decreasing in thickness as it extends inwards from the periphery towards said aperture. The rear surface of the facing table may be formed with a plurality of circumferentially spaced ribs projecting into the substrate, the ribs extending inwardly away from the periphery of the element and towards said aperture.

The following is a more detailed description of embodiments of the invention, reference being made to the accompanying drawings in which:
Figure 1 is a side elevation of a typical drag-type drill bit in which cutting elements according to the present invention may be used,
Figure 2 is an end elevation of the drill bit shown in Figure 1,
Figure 3 is an underplan view, on an enlarged scale, of the superhard facing table of a preform cutting element in accordance with the invention, the substrate, which would normally be bonded to the underside of the facing table, being removed to show the configuration of the undersurface of the facing table,
Figure 4 is a cross-section of a cutting element incorporating the facing table of Figure 3,
Figures 5 and 6 are similar views to Figures 3 and 4 of an alternative arrangement,
Figure 7 is a plan view of a preform cutting element in accordance with the second aspect of the invention,
Figure 8 is a side view of the element shown in Figure 7,
Figure 9 is a section along the line 9-9 in Figure 7,
Figures 10-12 are views corresponding to Figures 7-9 respectively, showing the cutting element after wear has occurred in use,
Figures 13-18 are similar views to Figures 7-12 respectively showing an alternative configuration,
Figures 19-21 are cross-sections of further forms of cutting elements according to the invention,
Figure 22 is a diagrammatic front view of a number of cutting elements, mounted on a drill bit, incorporating the invention described in relation to Figures 7-18, and
Figures 23 and 24 are plan and sectional views respectively of one form of gauge cutter in accordance with the invention.

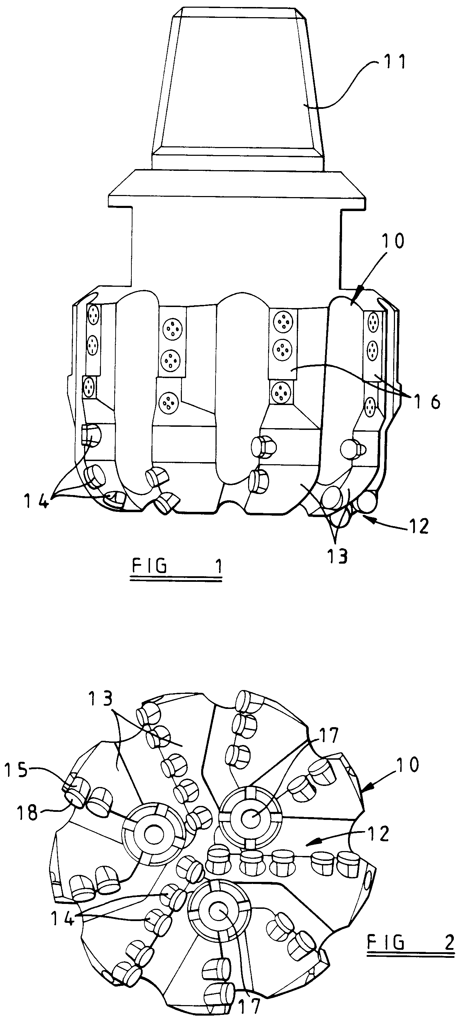

Figures 1 and 2 show a typical full bore drag-bit of a kind to which cutting elements of the present invention are applicable. The bit body 10 is machined from steel and has a shank formed with an externally threaded tapered pin 11 at one end for connection to the drill string. The operative end face 12 of the bit body is formed with a number of blades 13 radiating from the central area of the bit, and the blades carry cutter assemblies 14 spaced apart along the length thereof. The bit has a gauge section including kickers 16 which contact the walls of the borehole to stabilise the bit in the borehole. A central passage (not shown) in the bit and shank delivers drilling fluid through nozzles 17 in the end face 12 in known manner.

Each cutter assembly 14 comprises a preform cutting element 18 mounted on a carrier 19 in the form of a post which is located in a socket in the bit body. Each preform cutting element is in the form of a circular tablet comprising a facing table of superhard material, usually polycrystalline diamond, bonded to a substrate which is normally of cemented tungsten carbide. The rear surface of the substrate is bonded, for example by LS bonding, to a suitably orientated surface on the post 19.

One form of preform cutting element for a rotary drill bit, in accordance with the present invention, is shown in Figures 3 and 4. The cutting element comprises a polycrystalline diamond front facing table 30 bonded to a cemented tungsten carbide substrate 31. The facing table 30 comprises a front flat layer 32 which provides the front cutting face 33 of the facing table and integrally formed with the layer 32 is a region 34 of increased thickness adjacent the cutting edge 35 of the cutting element.

As best seen in Figure 3, the region 34 extends over a part circular segment of the facing table and, as may be seen from Figure 4, increases linearly in thickness as it extends from the flat layer 32 to the periphery of the cutting element.

The arrangement improves the wear resistance of the facing table at the cutting edge and also may reduce the tendency for spalling or delamination of the facing table adjacent the cutting edge.

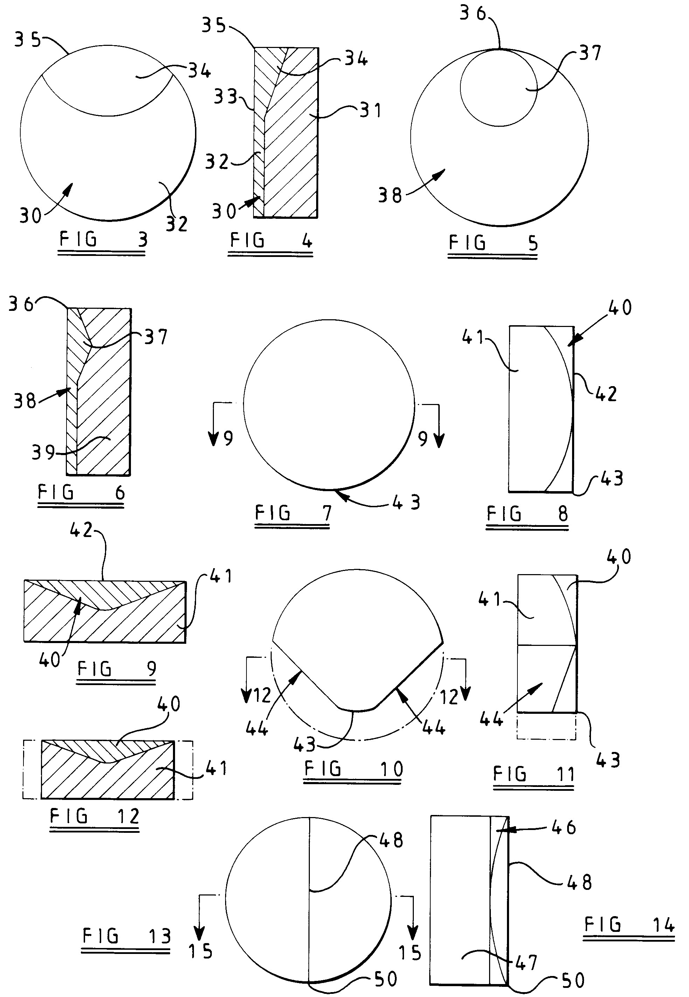

In the alternative arrangement shown in Figures 5 and 6 there is again a region of increased thickness adjacent the cutting edge 36 and in this case the region of increased thickness is in the form of a circular conical projection 37 extending from the rear surface of the superhard facing table 38 into the substrate 39.

Figures 7-12 show another form of preform cutting element for a rotary drill bit in accordance with the invention. The cutting element is in the form of a circular tablet comprising a facing table 40 of polycrystalline diamond bonded to a substrate 41 of cemented tungsten carbide. The front face 42 of the facing table is flat. The facing table 40 is of varying thickness, being of greater thickness along a diameter of the cutting element extending away from the cutting edge 43 so as to form, in effect, a diametrically extending ridge projecting into the substrate 41.

Figures 10-12 show similar views of the cutting element of Figures 7-9 after the cutting element has been in use and shows the wear pattern. The regions 44 to each side of the cutting edge 43 wear away more rapidly than the cutting edge due to the smaller thickness of the diamond layer in these regions. Consequently the cutting element wears in a generally "pointed" configuration as shown in Figure 10. This keeps to a minimum the length of the wear flat at the cutting edge and provides a shape which is believed to be more efficient in cutting formation.

Figures 13-17 show an alternative configuration for achieving a similar effect. In this case the rear surface 45 of the facing table 46 is planar and bonded to the substrate 47. The facing table 46 is of varying thickness to provide a linear ridge 48 extending diametrically across the cutting element from the cutting edge 50, the thickness of the facing table 46 decreasing linearly as it extends away from the ridge 48 to the side edges of the cutting element.

Again, as shown in Figure 16, the reduced thickness of the diamond layer 46 to each side of the cutting edge 50 results in the cutting element wearing in a generally pointed configuration.

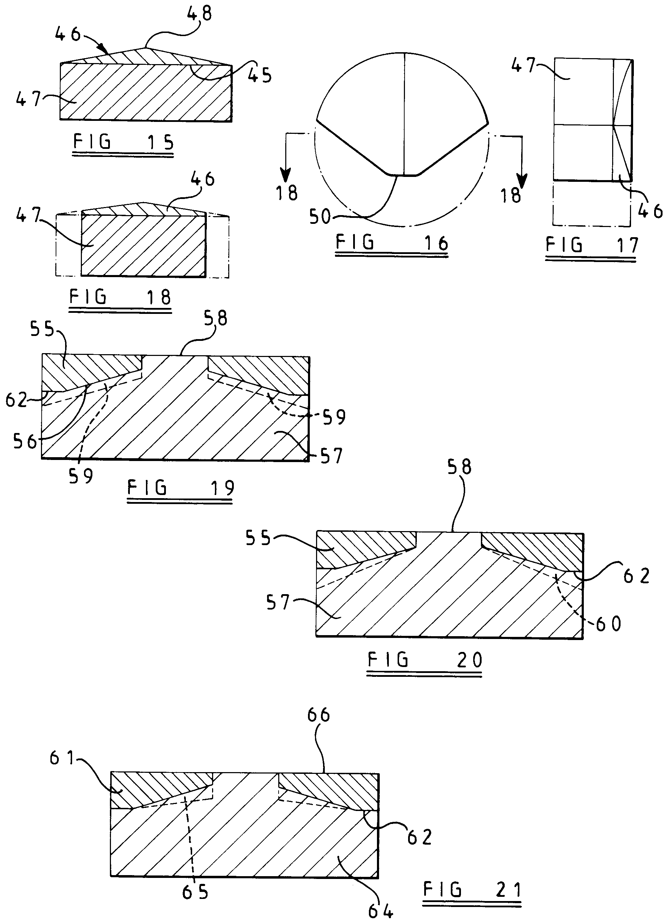

In the arrangements previously described the superhard facing table of the cutting element has been described as extending continuously across the substrate, so as to provide a front cutting face which is composed entirely of superhard material. Figures 19-24 show alternative arrangements where the superhard facing table is generally annular so that a portion of the substrate is exposed and provides the central region of the cutting face.

In the arrangement of Figure 19 the polycrystalline diamond facing table 55 is annular and of trapezoidal cross-section so as to be formed with an annular rearward face 62 surrounding a frusto-conical interface 56 between the facing table and the substrate 57. A generally circular area 58 of the substrate is exposed at the cutting face and forms the central region thereof.

The frusto-conical undersurface of the facing table 55 is formed with an array of outwardly extending ribs 59 which are spaced apart around the circumference of the undersurface of the facing table. The ribs 59 project into the substrate 57 and may extend generally radially or each rib may be inclined at an angle to the radial direction. The ribs may be of substantially constant depth, as shown in Figure 29, or may increase or decrease in depth as they extend outwardly as shown by the ribs 60, 65 in the modified versions of Figures 30 and 31. The ribs 59, 60, 65 may vary in width as they extend outwardly and may also vary in thickness as they extend downwardly into the substrate.

In the arrangements of Figures 7-18, where the facing table has a region of greater thickness extending away from the cutting edge, the cutting element is described as initially being circular, the presence of the region of increased thickness of the facing table causing the cutting element to wear in a pointed configuration which may provide a more efficient cutting action. It will be appreciated, however, that the invention is not restricted to circular cutting elements but may also be applied to cutting elements of other shapes, including elements which are initially of a somewhat pointed configuration.

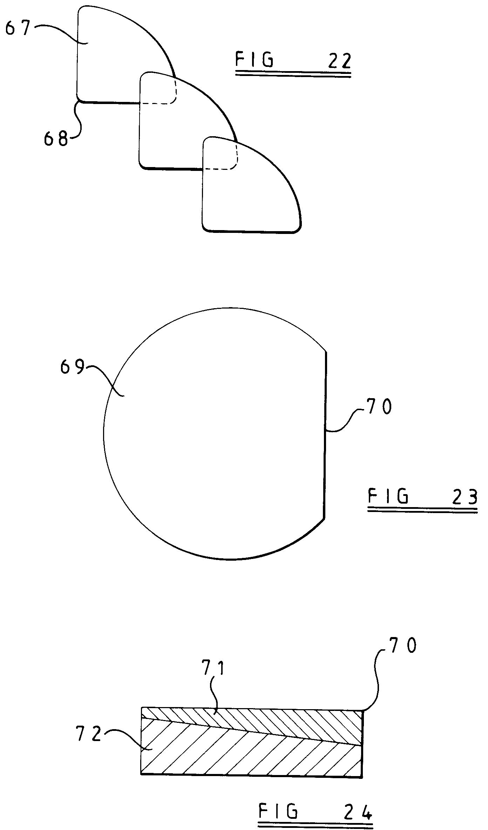

For example, Figure 22 shows diagrammatically part of an array of cutting elements 67 which are generally sector-shaped so as to provide a generally pointed cutting edge 68. The initial shape of each cutting element is therefore similar to the worn shape of the cutting elements illustrated in Figures 10 and 16. Each cutting element 67 may have a facing table which is of greater thickness as it extends away from the cutting edge, for example is of the cross-sectional shape shown in Figures 10 or 16. The cutting elements will therefore tend to continue to maintain the same pointed shape as wear occurs, thus maintaining their cutting efficiency.

Figure 23 shows the present invention applied to a gauge cutter 69. As is well known gauge cutters are often generally circular in form with a segment of the circle removed to form a straight cutting edge as indicated at 70 in Figure 23. Such gauge cutters are often manufactured by removing a sector from a standard circular cutter. As shown in cross-section in Figure 24, the facing table 71 of the cutter increases linearly in thickness as it extends towards the straight cutting edge 70, the tungsten carbide substrate 71 decreasing correspondingly in thickness so that the cutter remains of the same thickness overall.

In any of the above-described arrangements in accordance with the invention a transition layer may be provided between the facing table and the substrate. The transition layer may, for example, comprise polycrystalline diamond particles embedded in a tungsten carbide matrix.

## Claims

1. A preform element including a facing table (30) of superhard material having a front face (33), a peripheral surface, and a rear surface bonded to a substrate (31) which is less hard than the superhard material, characterised in that the facing table (30) is of continuously varying thickness over at least a part of its area, whereby the rear surface thereof is non-planar.

2. A preform element according to Claim 1, wherein the front face (33) of the facing table (30) is substantially flat.

3. A preform element according to Claim 1 or Claim 2, wherein the preform element is a cutting element for use on a rotary drill bit, part of the peripheral surface of the cutting element forming a cutting edge(35), and wherein the facing table is of greater thickness in the vicinity of the cutting edge.

4. A preform cutting element according to Claim 3, wherein an area (34) of the facing table which includes said cutting edge (35) increases gradually in thickness as it extends from an interior region of the facing table to said cutting edge.

5. A preform cutting element according to Claim 4, wherein said area (34) of the facing table increases substantially linearly in thickness as it extends to the cutting edge (35).

6. A preform cutting element according to Claim 4 or Claim 5, wherein said area (34) of increasing thickness of the facing table has an arcuate boundary within the interior of the facing table.

7. A preform cutting element according to Claim 3, wherein an enclosed area (37) of the facing table, adjacent the cutting edge (36), increases in thickness as it extends from the periphery of the area (37) to a central region thereof.

8. A preform cutting element according to Claim 7, wherein said area (37) increases substantially linearly in thickness as it extends to said central region thereof.

9. A preform cutting element according to Claim 7 or Claim 8, wherein a part of the periphery of said area (37) defines at least a part of the cutting edge (36) of the element.

10. A preform cutting element according to any of Claims 7-9, wherein said area (37) is substantially circular.

11. A preform cutting element according to any of Claims 1-10, wherein the preform element is substantially circular.

12. A preform cutting element including a facing table (40) of superhard material having a front face (42), a peripheral surface, and a rear surface bonded to a substrate (41) which is less hard than the superhard material, the facing table being of non-uniform thickness. characterised in that the facing table (40) comprises a region of greater thickness extending away from the cutting edge (43) towards the interior of the cutting element.

13. A preform cutting element according to Claim 12, wherein the region of greater thickness comprises a ridge of superhard material which is of substantially constant width as it extends away from the cutting edge (43).

14. A preform cutting element according to Claim 13, wherein the ridge of greater thickness extends across the cutting element from the cutting edge (43) to the opposite part of the peripheral surface.

15. A preform cutting element according to Claim 14, wherein the thickness of the facing table (40) varies continuously from a minimum thickness at each of two side edges to a maximum thickness in the region of a centreline of the cutter extending away from the cutting edge (43).

16. A preform cutting element according to any of Claims 12-15, wherein the front face (42) of the facing table (40) is substantially flat so that the portion of greater thickness projects into the substrate (41).

17. A preform cutting element according to any of Claims 12-15, wherein the variation in thickness of the facing table (46) provides a non-planar front face for the facing table (46).

18. A preform cutting element according to any of Claims 12-17, wherein the element is substantially circular.

19. A preform cutting element according to Claim 3, wherein part of the peripheral surface of the element is substantially straight to provide a straight cutting edge (70), and wherein the facing table (71) is of maximum thickness along said straight cutting edge (70) and decreases in thickness as it extends away from the cutting edge.

20. A preform cutting element according to Claim 1, wherein the facing table (55) is formed with an aperture which is filled with the material of the substrate (57), so that part (58) of the substrate forms part of the front face of the cutting element, and wherein the facing table (55) is of maximum thickness at the periphery of the cutting element and decreases in thickness as it extends inwards from the periphery towards said aperture.

21. A preform cutting element according to Claim 20, wherein the rear surface of the facing table (55) is formed with a plurality of circumferentially spaced ribs (59) projecting into the substrate, the ribs extending inwardly away from the periphery of the element and towards said aperture.
